# EUROPEAN PATENT SPECIFICATION

(11) **EP 3 426 954 B1**
(45) Date of publication and mention of the grant of the patent: **11.12.2019**
(21) Application number: 16723845.0
(22) Date of filing: 07.03.2016
(51) Int. Cl.: F16K 3/26, F01P 7/16

(54) **A THERMAL MANAGEMENT MODULE WITH LOOSE SLIDER VALVE**
WÄRMEVERWALTUNGSMODUL MIT LOSEM SPERRSCHIEBER
MODULE DE GESTION THERMIQUE DOTÉ DE TIROIR LÂCHE

(43) Date of publication of application: 16.01.2019
(73) Proprietor: Kirpart Otomotiv Parçalari Sanayi Ve Ticaret Anonim Sirketi, 16800 Bursa (TR)
(72) Inventor: UNLUASLAN, Faruk, 16800 Orhangazi/Bursa (TR)
(74) Representative: Dericioglu, E. Korhan
(86) International application number: PCT/TR2016/050060
(87) International publication number: WO 2017/155483

(56) References cited:
- WO-A1-2008/119189
- FR-A1- 2 868 811
- US-A- 4 875 437

## Description

### Technological Area

This invention relates to a thermal management module with loose slider valve which controls the circulation direction of the coolant fluid and which is a component of coolant circulation system of internal combustion engines.

### Known Situation of the Art

Thermostats are used to regulate the motor temperature at the intended value in internal combustion engines. These thermostat mechanisms are located inside of a body and control the direction of coolant fluid whether radiator output or by-pass output regarding the temperature changes of the coolant fluid.

In current known situation, to circulate or not to circulate the fluid is provided by a poppet type valve which is solidly connected to the body of the thermal element besides the circulation of the fluid through the by-pass connection is provided a by-pass valve which is located on the other direction of the thermal element which is also connected solidly. Thermal element is moving up and down bidirectionally and valves control the circulation of the fluid by opening and closing the by-pass and radiator outputs.

In most case, an L shaped curtain type valve which is connected solidly to the main valve is used for controlling the by-pass output if by-pass output and thermal element movement axis is not placed in the same axis. Due to this solid connection between radiator port valve and bypass port valve; perfect leakage tightness could not be achieved through the bypass port.

In one of the known situation, a thermostat mechanism to regulate the flow of the coolant liquid is mentioned which is cited in the U.S. patent document US8827172. A similar arrangement is shown in WO2008/119189A1. Thermal expandable element which is a component of this thermostat mechanism has a piston. When the piston moves, the valve is driven and the flow of the coolant is controlled. On this invention, radiator port and bypass port is placed on the same axis which is called coaxial and also thermal actuator has a motion on the same axis.

### Brief Description of the Invention

With this invention , it is aimed to control the circulation of the fluid between radiator output and by-pass output which is not placed on the same axis with thermal actuator mechanism motion axis and to embody loose valve thermal management system which open or close the by-pass output by means of up/down movement of the thermal actuator and which will not cause of coolant leakage to by-pass output while sliding loose valve is fully closing bypass output since it is bonded to thermal element motion mechanism with a loose structure
It is aimed to embody a thermal management module with loose slider valve where a sliding loose valve is installed to a parallel axis which is not coaxial with movement axis of the actuator and which controls the circulation of coolant fluid through by-pass output and which has an actuator rather paraffin based or electrically heated paraffin based or electromechanically activated.

### Detailed Description of the Invention

This invention is explained by following figures detailed. On these figures:

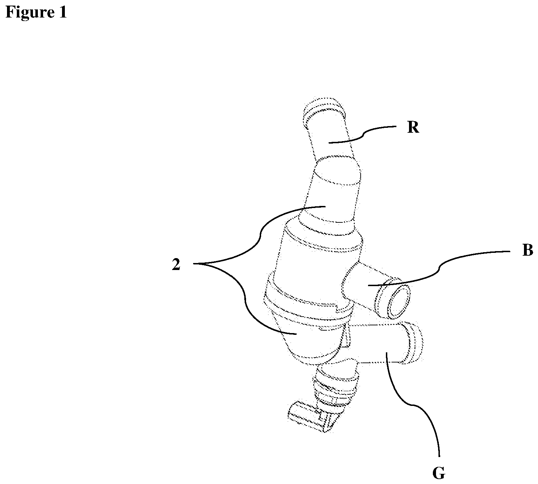

**Figure 1** 3D view of paraffin based thermal management module with loose slider valve

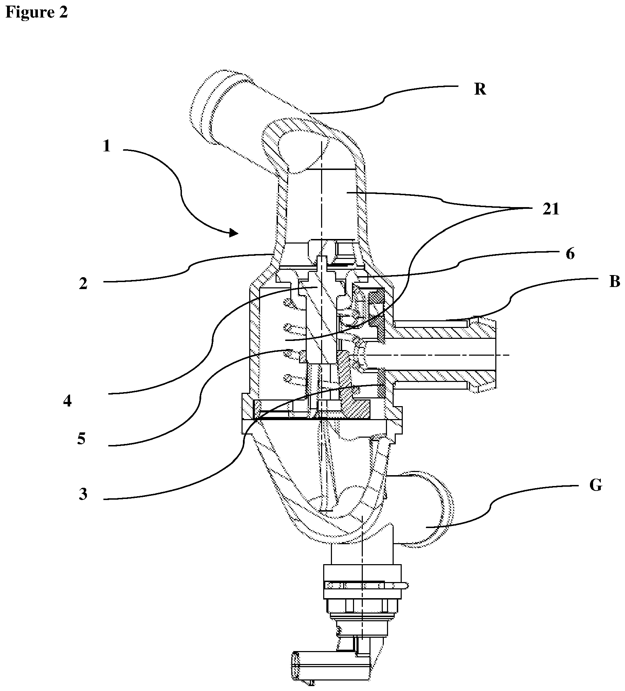

**Figure 2** Cross-section view of paraffin based thermal management module with loose slider valve while sliding loose valve is fully opened

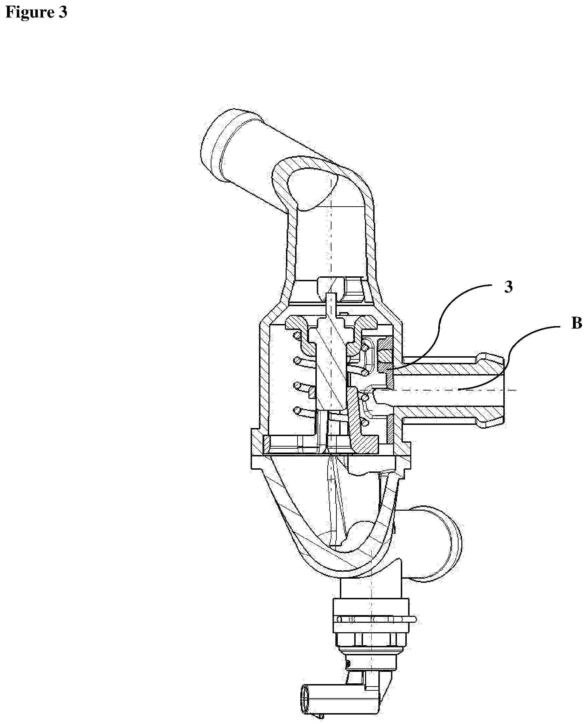

**Figure 3** Cross-section view of paraffin based thermal management module with loose slider valve showing the position of valve when by-pass is open

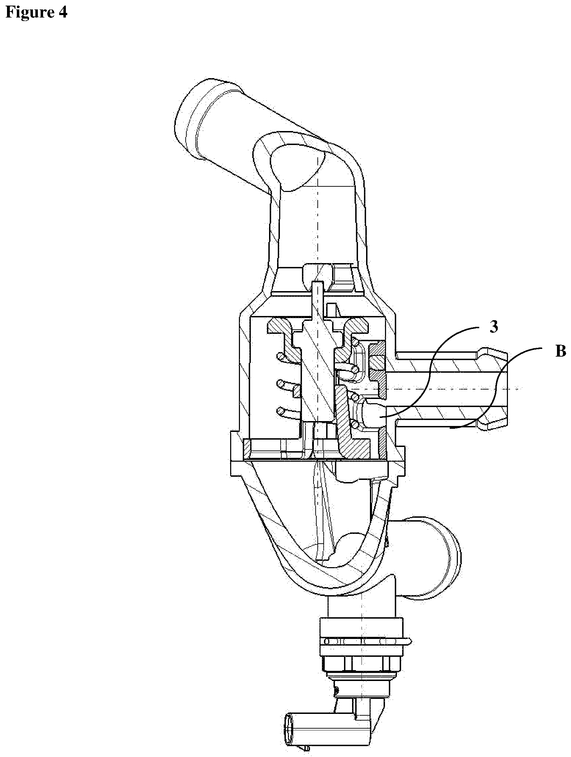

**Figure 4** Cross-section view of paraffin based thermal management module with loose slider valve showing the position of valve while by-pass is closing

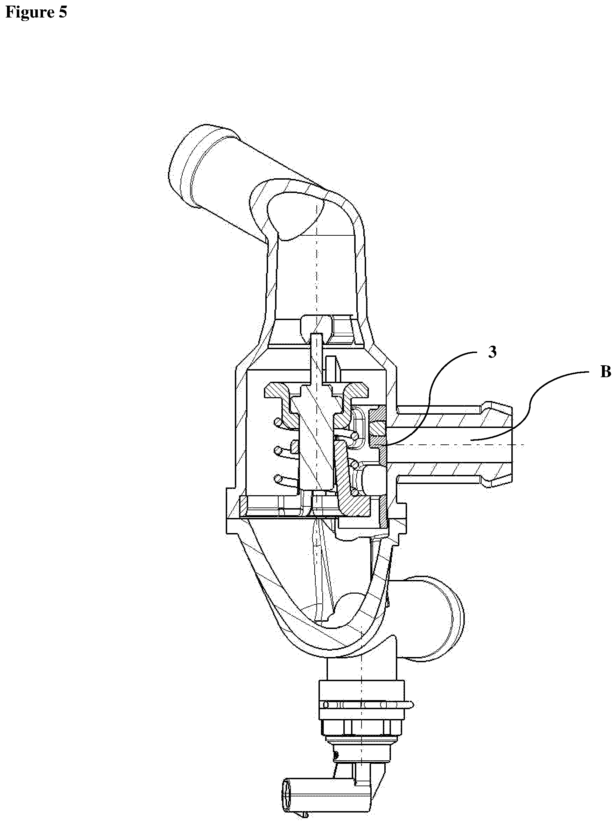

**Figure 5** Cross-section view of paraffin based thermal management module with loose slider valve showing the position of valve when by-pass is closed by sliding loose valve

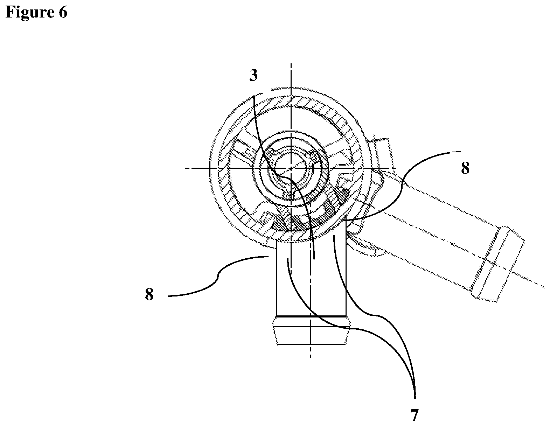

**Figure 6** View of guide teeth of loose valve and primary connection element

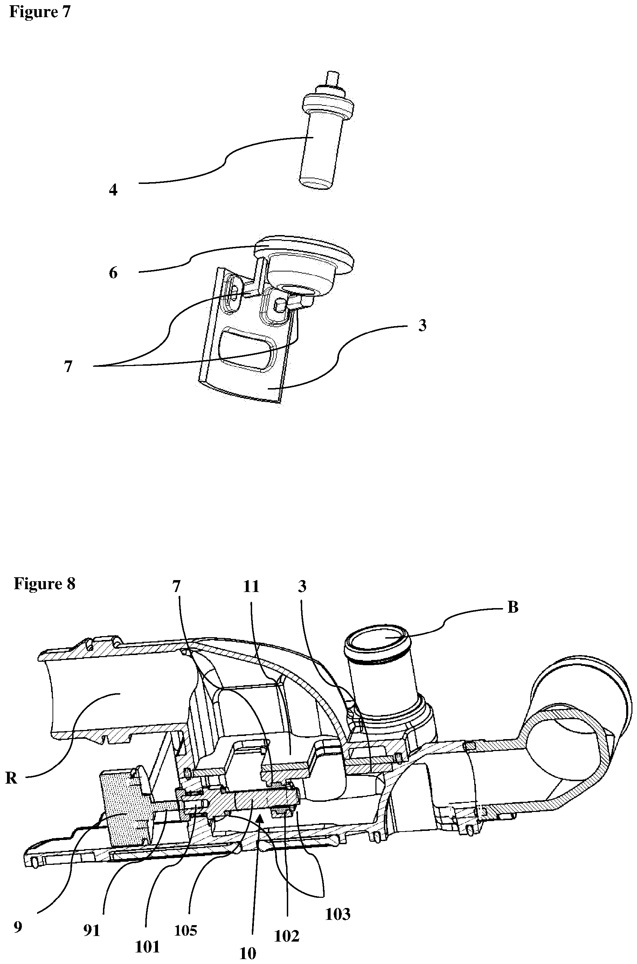

**Figure 7** Pop up view of loose valve and primary connection element
**Figure 8** Cross-section view of the electromechanically activated thermal management module with loose slider valve when radiator output is fully opened and by-pass output is fully closed.

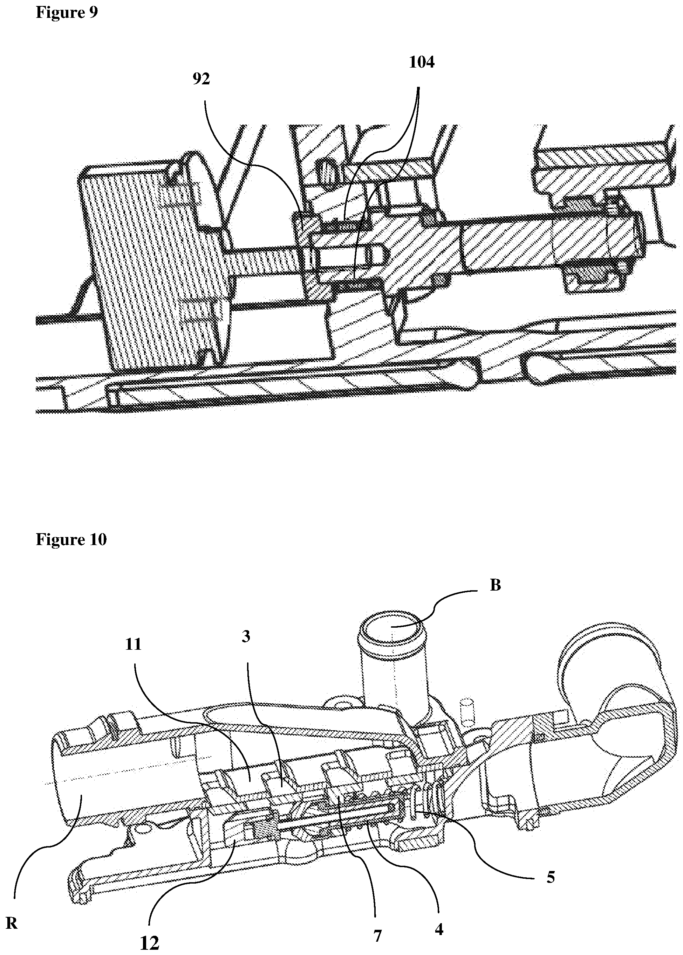

**Figure 9** Cross-section view of the electromechanically activated thermal management module with loose slider valve showing coupling, sealing element and its mechanism for converting rotary motion to linear motion.
**Figure 10** Cross-section view of electrically heated paraffin based thermal management module with loose slider valve structure when radiator output is fully closed and by-pass output is fully opened.

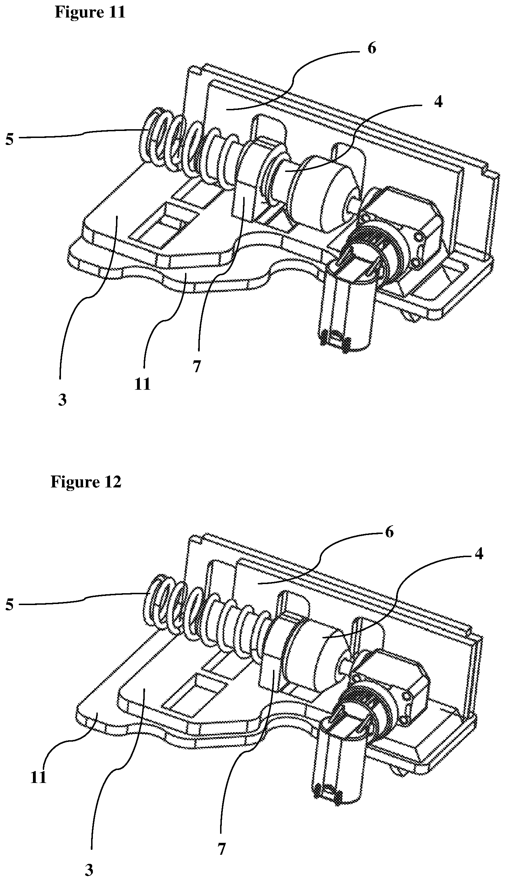

**Figure 11** View of the loose valve of electrically heated paraffin based thermal management module with sliding loose L shaped valve structure while radiator output is fully opened and by-pass output is fully closed.
**Figure 12** View of the loose valve of electrically heated paraffin based thermal management module with loose slider valve when by-pass output is closed when radiator output is fully closed and by-pass output is fully opened.

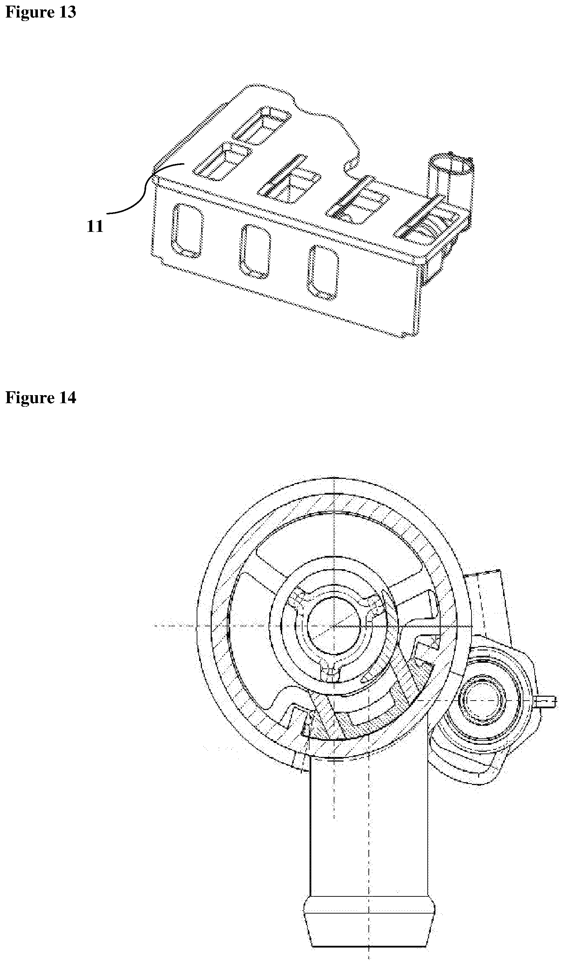

**Figure 13** View of valve seat
**Figure 14** View of clearance between valve seat and loose valve

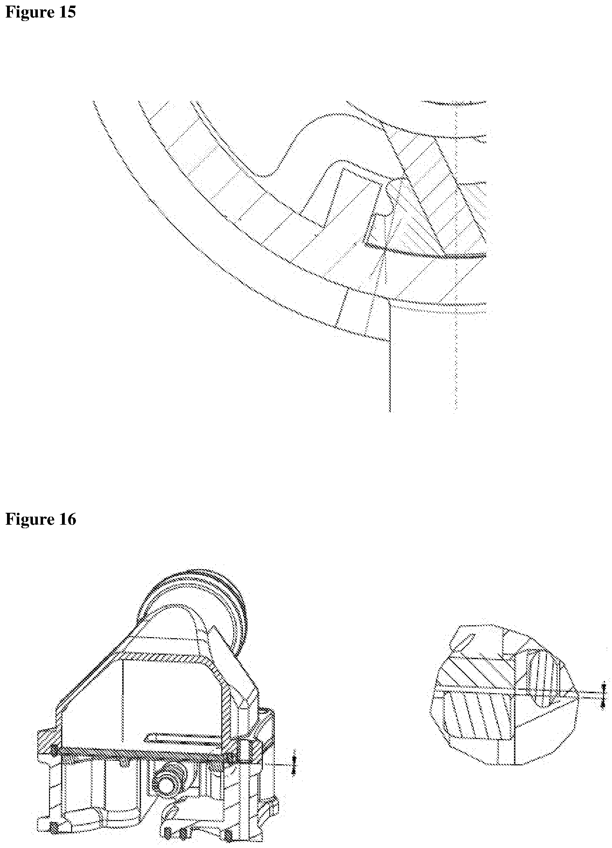

**Figure 15** Detailed view of clearance between valve seat and loose valve
**Figure 16** View of clearance between valve seat and loose valve

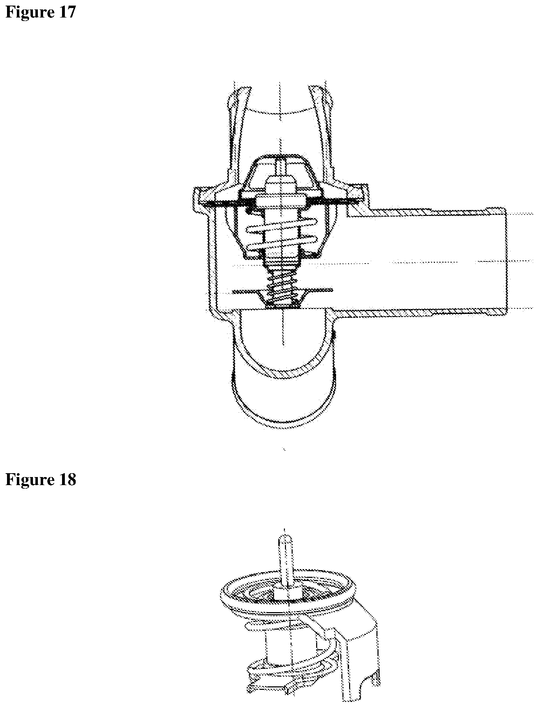

**Figure 17** View of the valve position of known situation of the art
**Figure 18** View of curtain valve of known situation of the art

There are references below and here are descriptions of references:
**1.** Thermal management module with loose slider valve
**2.** Body
   **21.** Space
**3.** Loose valve
**4.** Actuator with thermal element
**5.** Spring
**6.** Radiator valve
**7.** Primary connection element
**8.** Guide teeth
**9.** Electromechanical actuator
   **91.** Primary shaft
   **92.** Coupling
**10.** Spindle drive mechanism
   **101.** Guiding hole
   **102.** Secondary connection element
   **103.** Leaning point
   **104.** Sealing element
   **105.** Spindle drive
**11.** Seating element
**12.** Heating element

**B.** By-pass output
**R.** Radiator output
**G.** Input

Thermal management module with loose slider valve which is a component of the coolant circulation system of the internal combustion engines essentially comprises:
- At least one input (G) which transmits the coolant liquid from engine block
- At least a body (2) which provides housing for the elements of the thermal management module with loose slider valve and has two parts impending upper and lower and transmits the coolant from input (G)
- At least a space (21) which is inside the body and in which components of the module is installed
- Inside of the space (21), at least a sliding loose valve (3) which moves bidirectionally up and down along the axis of the space (21) and controls the flow of the coolant liquid
- Inside of the space (21), at least an actuator with thermal element (4) which moves up and down on the axis of the space (21) according to temperature change and through this change a force to be generated for driving the radiator valve (6) and sliding loose valve (3) and controls the temperature of coolant fluid.
- Inside of the space (21), at least a spring (5) which applies force on the actuator with thermal element (4) in the opposite direction of the force generated by the actuator with thermal element (4)
- At least a radiator valve (6) which controls the flow of the coolant fluid through the radiator output (R) by opening and closing and which is connected to the actuator with thermal element (4)
- At least two primary connection elements (7) which are in fact an extensity of radiator valve (6) and transfer the movement of the actuator with thermal element (4) to the sliding loose valve (3) by the holes which guide primary connection elements (7) on the sliding loose valve (3)
- At least two guide teeth (8) which are in fact an extensity of the body (2) in and along the space (21) which keeps the sliding loose valve (3) on the axis of the space (21) by guiding from both edges.

In an embodiment of the invention, sliding loose valve (3) which is not connected solidly to actuator with thermal element (4) starts to allow or obstruct the coolant fluid to flow through the by-pass output (B) and simultaneously the radiator valve (6) starts to obstruct or allow the coolant fluid to flow through the radiator output (R) with the movement created by the actuator with thermal element (4). Due to pressure difference applied on both sides of sliding loose valve (3), the sliding loose valve (3) leans against valve seat and prevent leakiness through the valve system while it is fully closed. Since slider valve is leaned against valve seat, the clearance between the sliding loose valve (3) and the seating surface of the valve on the body (2) is zeroed in

Sliding loose valve (3) thermal management module with loose slider valve comprise a body (2) which has two parts just about upper and lower case, a preferably paraffin based temperature sensitive actuator with thermal element (4), a spring (5) which forces the actuator with thermal element (4) to opposite direction, a radiator valve (6) which controls the flow through the radiator output (R) and a sliding loose valve (3)

In a preferred embodiment of the invention, a sliding loosed valve (3), an actuator with thermal element (4) and a spring (5) is fitted inside a body (2).

Upper part of the body (2) has a geometry which allows radiator output (R) and by-pass output connections (B) and lower part has a geometry which allows input (G) and actuator with thermal element (4) connections. There are guide teethes in the body (2) along the space (21) and contacting the sliding loose valve (3) from two sides. This guide teethes (8) provide a linear movement on the axis of the space by guiding the sliding loose valve (3) from both sides.

There are primary connection elements (7) to provide a connection between the sliding loose valve (3) and the actuator with thermal element (4) which are in fact extensions of the radiator valve (6). These primary connection elements (7) transfer the movement of the actuator with thermal element (4) to the sliding loose valve (3) by contacting the sliding loose valve (3).

The shaft of the actuator with thermal element (4) is surrounded by the wall thickness of the body (2) around that shaft which guides the shaft so that a movement only on the axis of the space (21) is provided for the actuator with thermal element (4).

In an embodiment of the invention, an actuator with thermal element (4) moves up and down bidirectionally on the axis of the space (21) inside of the body (2) so that the flow to different outputs are allowed or obstructed. This movement is also transferred to the sliding loose valve (3) by the primary connection element (7) in this way the flow of the radiator output (R) and by-pass output (B) is controlled.

Actuator with thermal element (4) is filled with a compound which is temperature sensible and this compound expands or shrinks directly proportional to temperature. Thereby in case temperature increases, actuator with thermal element (4) starts to apply a downward force and push the sliding loose valve (3) and radiator valve (6) to move downward too. This movement also causes a downward movement on the spring (5) and by this movement spring (5) starts tensing and the radiator output (R) starts opening. Meantime by the downward movement of the sliding loose valve (3) by-pass output (B) starts closing. During this movement radiator output (R) is opened and by-pass output is closed simultaneously and a flow through radiator output (R) is provided and the flow through the by-pass output (B) is obstructed gradually. This movement continues till the actuator with thermal element (4) reaches its full open position. When it reaches its full open position, by-pass output (B) is fully closed and radiator output (R) is fully opened and the absolute amount of the coolant fluid is provided to flow through the radiator output (R).

In case temperature decreases, compound inside of the actuator with thermal element (4) starts to shrink and the force applied to the spring (5) decreases. If this force gets lower than the force of the spring, actuator with thermal element (4) and sliding loose valve (3) correspondingly starts to move upward. During this movement, radiator output (R) is closed and by-pass output (B) is opened simultaneously by the upward moving radiator valve (6), sliding loose valve (3) and the actuator with thermal element (4). Upward moving radiator valve (6) starts to block radiator output (R) and upward moving sliding loose valve (3) starts to open by-pass output (B). This movement continues till the radiator output (R) is fully blocked by the radiator valve (6). When it is blocked fully, radiator output (R) is closed and by-pass output (B) is opened and the absolute amount of the coolant fluid is provided to flow through the by-pass output (B).

Sliding loosed valve (3) is guided by the body (2). There is no accurate overlap between the surface of the sliding loose valve (3) and the surface of guiding body (2). There is some clearance. This clearance is removed by the pressure drop between two sides of the sliding loose valve (3) which is generated by the flow pressure of the coolant liquid and which forces the sliding loose valve (3) to lean against the seating surface of the body (3) by this pressure drop sealing is provided.

In one embodiment of the invention, the force which is needed to drive the sliding loose valve (3) on the axis of the space (21) is supplied by an electromechanical actuator (9). Thermal management module with loose slider valve which is a component of the coolant circulation system of the internal combustion engines essentially comprises:
- At least one input (G) which transmits the coolant liquid from engine block
- At least a body (2) which provides housing for the elements of the thermal management module with loose slider valve and has two parts impending upper and lower and transmits the coolant from input (G)
- At least a space (21) which is inside the body and in which components of the module is installed
- At least an electromechanical actuator (9)
- Inside of the space (21), at least a sliding loose valve (3) which moves bidirectionally along the axis of the space (21) and controls the flow of the coolant liquid through by-pass output (B) or radiator output (R)
- At least a primary shaft (91) which is in fact a part of the electromechanical actuator (9)
- At least a coupling (92) which has a hole that primary shaft (91) is able to traverse and which is able to provide a movement without an axial run-out
- At least a spindle drive mechanism (10) which transfers the rotational motion from primary shaft (91) to sliding loose valve (3)
- At least a spindle drive (105) which runs along the space (21) inside the body (2) and has a guiding hole (101) on the primary shaft (91) side and rotates simultaneously with primary shaft (91)
- At least a primary connection element (7) which is in fact an extension of the sliding loose valve (3)
- At least a secondary connection element (102) which is connected to the spindle drive (105) from the side which is inside the body (2) and is inserted to a guiding hole on the primary connection element (7) with a protrusion and drives the primary connection element (7) to opening or closing direction according to rotational direction of the spindle drive (105)
- At least a seating element (11) which is connected to the body (2) and is parallel to the sliding loose valve (3) and on which sliding loose valve (3) make its movement
- At least two leaning points (103) which are connected to the spindle drive (105) from its touchpoint to primary connection element (7), secondary connection element (102) and the body (2) and are placed to limit the movement of the spindle drive mechanism (10) between the desired area
- At least a sealing element (104) which is connected to surface on the spindle drive mechanism (10) to reduce the friction effects on the joint faces

In one embodiment of the invention, movement is supplied by an electromechanical drive mechanism (9). The primary shaft (91) which is in fact a part of the electromechanical actuator (9) is guided by the guiding hole (101). Spindle drive mechanism (10) is driven by primary shaft (91). Primary shaft rotates to a direction by the guiding hole (101), this movement is transferred to the spindle drive mechanism (10). This rotational movement on the spindle drive mechanism is transformed to a linear movement by the secondary connection element (102) which is in form of a nut and driven by spindle drive (105). Primary connection element (7) is connected directly to the secondary connection element (102) by this means sliding loose valve (3) is driven. For one direction, sliding loose valve (3) starts to open the radiator output (R) and close the by-pass output (B). This movement continues till the primary connection element (7) leans against the leaning point (103) on this direction. For other direction, sliding loose valve (3) starts to close the radiator output (R) and open the by-pass output (B). This movement continues till the primary connection element (7) leans the leaning point (103) on this direction.

Sliding loose valve (3) is guided by the seating element (11). There is no accurate overlap between the surface of the sliding loose valve (3) and the surface of seating element (11). There is some clearance. This clearance is removed by the pressure drop between two sides of the sliding loose valve (3) which is generated by the flow pressure of the coolant liquid and by this pressure drop sealing is provided.

In yet another embodiment of the invention the force which is required to drive the sliding loose valve (3) on the axis of the space (21) is provided by an actuator with thermal element (4) which has a heating element (12). Thermal management module with loose slider valve which is a component of the coolant circulation system of the internal combustion engines essentially comprises:
- At least one input (G) which transmits the coolant liquid from engine block
- At least a body (2) which provides housing for the elements of the thermal management module with loose slider valve and has two parts impending upper and lower and transmits the coolant from input (G)
- At least a space (21) which is inside the body and in which components of the module is installed
- At least a sliding loose valve (3) which moves bidirectionally along the axis of the space (21) and controls the flow of the coolant liquid through by-pass output (B)
- At least an actuator with thermal element (4) which is contacting with a heating element (12) and moves up and down on the axis of the space (21) according to temperature change and through this change a force to be generated for driving the sliding loose valve (3) and controls the temperature of coolant fluid.
- At least a spring (5) which applies force on the actuator with thermal element (4) in the opposite direction of the force generated by the actuator with thermal element (4)
- At least a radiator valve (6) which controls the flow of the coolant fluid through the radiator output (R) by opening and closing and which is connected to the actuator with thermal element (4)
- At least a primary connection element (7) which is in fact an extensity of radiator valve (6) and transfers the movement of the actuator with thermal element (4) to the sliding loose valve (3)
- At least a seating element (11) which is connected to the body (2) and is parallel to the sliding loose valve (3) and on which sliding loose valve (3) make sliding movement

The force which is needed to drive the valves is provided by an actuator with thermal element (4) preferably including a heating element (12). It comprises an actuator with thermal element (4), preferably an electrical heating element (12) to heat the actuator with thermal element (4), a spring (5) which apply a force to the actuator with thermal element (4) to the closing direction when temperature decreases, a radiator valve (6) to control the flow through the radiator output (R) and a sliding loose valve (3) to control the flow through the by-pass output (B).

Upper case of the body (2) has a suitable geometry for by-pass output (B) and radiator output (R) as well as lower case of the body (2) has for input (G) and actuator with thermal element (4). There is primary connection element (7) existing to provide a connection between sliding loose valve (3) and actuator with thermal element (4). Primary connection element (7) transfers the movement of the actuator with thermal element (4) to the sliding loose valve (3).

The actuator with thermal element (4) is forced to move to the opening direction by heating by the aid of the heating element (12) to allow the fluid to flow through desired outputs with desired flow rates. This movement causes a tension on the spring (5). By the primary connection element (7), this movement is transferred to the sliding loose valve (3). In this way radiator output (R) starts to open and by-pass output (B) starts to close. This movement continues till the actuator with thermal element (4) reaches its full open position. So radiator output (R) is fully opened and by-pass output (B) is fully closed thereby absolute amount of the coolant fluid is provided to flow through the radiator output (R).

In case there is no heating and temperature decreases, compound inside of the actuator with thermal element (4) starts to shrink and the force applied to the spring (5) decreases. When this force gets lower than the force of the spring, actuator with thermal element (4) and sliding loose valve (3) correspondingly starts to move. During this movement, radiator output (R) is closed and by-pass output (B) is opened simultaneously by the moving radiator valve (6) sliding loose valve (3) and the actuator with thermal element (4). Moving radiator valve (6) starts to block radiator output (R) and moving sliding loose valve (3) starts to open by-pass output (B). This movement continues till the radiator output (R) is fully blocked by the radiator valve (6). When it is blocked fully, radiator output (R) is closed and by-pass output (B) is opened and the absolute amount of the coolant fluid is provided to flow through the by-pass output (B).

Sliding loose valve (3) is guided by the seating element (11). There is no accurate overlap between the surface of the sliding loose valve (3) and the surface of seating element (11). There are some clearances in millimeters. This clearance is removed by the pressure drop between two sides of the sliding loose valve (3) which is generated by the flow pressure of the coolant liquid and by this pressure drop sealing is provided.

## Claims

1. Thermal management module with loose slider valve for cooling circulation systems of the internal combustion engines essentially **comprises** at least an input (G) which transfers the coolant from engine block and **characterized by,**
- At least a body (2) which provides housing for the elements of the thermal management module with loose slider valve and has two parts impending upper and lower and transmits the coolant from input (G)
- At least a space (21) which is inside the body and in which components of the module is installed
- At least a sliding loose valve (3) inside of the space (21), which moves bidirectionally up and down along the axis of the space (21) and controls the flow of the coolant liquid
- At least an actuator with thermal element (4) inside of the space (21) which moves up and down on the axis of the space (21) according to temperature change and through this change a force to be generated for driving a radiator valve (6) and sliding loose valve (3) and controls the temperature of coolant fluid.
- At least a spring (5) inside of the space (21) which applies force on the actuator with thermal element (4) in the opposite direction of the force generated by the actuator with thermal element (4)
- At least a radiator valve (6) which controls the flow of the coolant fluid through the radiator output (R) by opening and closing and which is connected to the actuator with thermal element (4)
- At least two primary connection elements (7) which are in fact an extensity of radiator valve (6) and transfer the movement of the actuator with thermal element (4) to the loose valve (3) by the holes which guide primary connection elements (7) on the sliding loose valve (3)
- At least two guide teeth (8) which are in fact an extensity of the body (2) in and along the space (21) which keeps the sliding loose valve (3) on the axis of the space (21) by guiding from both edges.

2. A thermal management module with loose slider valve (1) according to claim 1, **characterized by** a body (2) which's upper part is connected to the radiator output (R) and by-pass output (B) and lower part is connected to the input (G) and actuator with thermal element.

3. A thermal management module with loose slider valve (1) according to claim 1, **characterized by** an actuator with thermal element (4) which has a thermal-sensible compound inside or which is produced by thermal-sensible element.

4. A thermal management module with loose slider valve (1) according to claim 1, **characterized by** an actuator with thermal element (4) which has paraffin based compound inside.

5. A thermal management module with loose slider valve (1) according to claim 1, **characterized by** an actuator with thermal element (4) which expands according to temperature and generates a force downward and drives the actuator with thermal element (4) and the sliding loose valve (3) downward by this force and which is pushed back upward by a spring (5) in case of shrinkage caused by temperature decreases.

6. A thermal management module with loose slider valve (1) according to claim 1, **characterized by** a sliding loose valve (3) which provides sealing by the pressure drop generated by the flows of the coolant fluids on both sides.

7. A thermal management module with loose slider valve (1) according to claim 1, **characterized by** a body (2) which has a wall thickness around the shaft of the actuator with thermal element (4) to surround that shaft to guide the shaft to provide a movement only on the axis of the space (21) for the actuator with thermal element (4).

8. Thermal management module with loose slider valve for cooling circulation systems of the internal combustion engines essentially **comprises** at least an input (G) which transfers the coolant from engine block and **characterized by,**
- At least a body (2) which provides housing for the elements of the thermal management module with loose slider valve and has two parts impending upper and lower and transmits the coolant from input (G)
- At least a space (21) which is inside the body and in which components of the module is installed
- At least an electromechanical actuator (9).
- At least a sliding loose valve (3) inside of the space (21), which moves bidirectionally up and down along the axis of the space (21) and controls the flow of the coolant liquid
- At least a primary shaft (91) which is in fact a part of the electromechanical actuator (9) and makes rotational movement
- At least a coupling (92) which has a hole that primary shaft (91) is able to traverse and which is able to provide a movement without an axial run-out
- At least a spindle drive mechanism (10) which transfers the rotational motion from primary shaft (91) to sliding loose valve (3)
- At least a spindle drive (105) which runs along the space (21) inside the body (2) and has a guiding hole (101) on the primary shaft (91) side and rotates simultaneously with primary shaft (91)
- At least a primary connection element (7) which is in fact an extensity of sliding loose valve (3),
- At least a secondary connection element (102) which is connected to the spindle drive (105) from the side which is inside the body (2) and is inserted to a guiding hole on the primary connection element (7) with a protrusion and drives the primary connection element (7) to opening or closing direction according to rotational direction of the spindle drive (105)
- At least a seating element (11) which is connected to the body (2) and is parallel to the sliding loose valve (3) and on which sliding loose valve (3) make sliding movement
- At least two leaning points (103) which are connected to the spindle drive (105) from its touchpoint to primary connection element (7), secondary connection element (102) and the body (2) and are placed to limit the movement of the spindle drive mechanism (10) between the desired area and
- At least a sealing element (104) which is connected to surface on the spindle drive mechanism (10) to reduce the friction effects on the joint faces

9. A thermal management module with loose slider valve (1) according to claim 8, **characterized by** a primary shaft (91) which is in fact a part of the electromechanical actuator (9) and makes rotational movement

10. A thermal management module with loose slider valve (1) according to claim 8, **characterized by** a secondary connection (102) element which is in fact a nut.

11. Thermal management module with loose slider valve for cooling circulation systems of the internal combustion engines essentially **comprises** at least an input (G) which transfers the coolant from engine block and **characterized by,**
- At least a body (2) which provides housing for the elements of the thermal management module with loose slider valve and has two parts impending upper and lower and transmits the coolant from input (G)
- At least a space (21) which is inside the body and in which components of the module is installed
- At least a sliding loose valve (3) inside of the space (21), which moves bidirectionally and controls the flow of the coolant liquid
- At least an actuator with thermal element (4) which is contacting with a heating element (12) and moves up and down on the axis of the space (21) according to temperature change and through this change a force to be generated for driving the loose valve (3) and controls the temperature of coolant fluid.
- At least a spring (5) which applies force on the actuator with thermal element (4) in the opposite direction of the force generated by the actuator with thermal element (4) when temperature decreases
- At least a radiator valve (6) which controls the flow of the coolant fluid through the radiator output (R) and which is connected to the actuator with thermal element (4)
- At least a primary connection element (7) which is in fact an extensity of radiator valve (6) and transfers the movement of the actuator with thermal element (4) to the sliding loose valve (3)
- At least a seating element (11) which is connected to the body (2) and is parallel to the sliding loose valve (3) and on which sliding loose valve (3) make sliding movement

## Patentansprüche

1. Wärmemanagementmodul mit losem Schieberventil für Kühlkreisläufe der Verbrennungsmotoren, das im Wesentlichen mindestens einen Eingang (G) **umfasst,** der das Kühlmittel aus dem Motorblock überträgt, and **gekennzeichnet durch,**
- Mindestens ein Körper (2), der Gehäuse für die Elemente des Wärmemanagementmoduls mit losem Schieberventil vorsieht und zwei Teile aufweist, die oben und unten anstehen und das Kühlmittel vom Eingang (G) übertragen
- Mindestens ein Raum (21), der sich innerhalb des Körpers befindet und in dem Komponenten des Moduls installiert sind
- Mindestens ein schiebendes loses Ventil (3) innerhalb des Raumes (21), das sich entlang der Achse des Raumes (21) bidirektional auf und ab bewegt und den Durchfluss der Kühlmittelflüssigkeit steuert
- Mindestens ein Stellglied mit dem Wärmeelement (4) innerhalb des Raumes (21), das sich entsprechend der Temperaturänderung auf und ab auf der Achse des Raumes (21) bewegt und durch diese Änderung eine zum Antreiben eines Heizkörperventil (6) und ein schiebendes loses Ventils (3) zu erzeugende Kraft erzeugt und die Temperatur des Kühlmittels steuert
- Mindestens eine Feder (5) innerhalb des Raumes (21), die eine Kraft auf das Stellglied mit dem Wärmeelement (4) in die entgegengesetzte Richtung der vom Stellglied erzeugten Kraft mit dem Wärmeelement (4) ausübt
- Mindestens ein Heizkörperventil (6), das den Durchfluss des Kühlmittels durch die Heizkörperleistung (R) durch Öffnen und Schließen steuert und das mit dem Stellglied mit dem Wärmeelement (4) verbunden ist
- Mindestens zwei primäre Verbindungselemente (7), die in der Tat eine Ausdehnung des Heizkörperventils (6) sind und die Bewegung des Stellglieds mit dem Wärmeelement (4) auf das lose Ventil (3) durch die Löcher übertragen, die primäre Verbindungselemente (7) am schiebenden losen Ventil (3) führen
- Mindestens zwei Führungszähne (8), die in der Tat eine Dehnung des Körpers (2) in und entlang des Raumes (21) sind, der das schiebende lose Ventil (3) auf der Achse des Raumes (21) hält, indem er von beiden Kanten geführt wird.

2. Wärmemanagementmodul mit losem Schieberventil (1) nach Anspruch 1, **gekennzeichnet durch** einen Körper (2), dessen oberer Teil mit der Heizkörperleistung (R) und der Bypassleistung (B) und dessen unterer Teil mit dem Eingang (G) und dem Stellglied mit dem Wärmeelement verbunden ist.

3. Wärmemanagementmodul mit losem Schieberventil (1) nach Anspruch 1, **gekennzeichnet durch** ein Stellglied mit dem Wärmeelement (4), das eine wärmeempfindliche Verbindung im Inneren aufweist oder das durch ein wärmeempfindliches Element hergestellt ist.

4. Wärmemanagementmodul mit losem Schieberventil (1) nach Anspruch 1, **gekennzeichnet durch** ein Stellglied mit dem Wärmeelement (4), das eine paraffinbasierte Verbindung im Inneren aufweist.

5. Wärmemanagementmodul mit losem Schieberventil (1) nach Anspruch 1, **gekennzeichnet durch** ein Stellglied mit dem Wärmeelement (4), das sich temperaturabhängig ausdehnt und eine Kraft nach unten erzeugt und das Stellglied mit dem Wärmeelement (4) und das schiebende lose Ventil (3) durch diese Kraft nach unten antreibt und das durch eine Feder (5) im Falle eines durch Temperaturabfälle verursachten Schrumpfens nach oben zurückgedrückt wird

6. Wärmemanagementmodul mit losem Schieberventil (1) nach Anspruch 1, **gekennzeichnet durch** ein schiebendes loses Ventil (3), das durch den Druckabfall, der durch die Strömungen der Kühlmittel auf beiden Seiten erzeugt wird, eine Abdichtung bewirkt.

7. Wärmemanagementmodul mit losem Schieberventil (1) nach Anspruch 1, **gekennzeichnet durch** einen Körper (2), der eine Wanddicke um die Welle des Stellglieds aufweist, mit dem Wärmeelement (4), das diese Welle umschließt, um die Welle zu führen, um eine Bewegung nur auf der Achse des Raumes (21) für das Stellglied mit dem Wärmeelement (4) vorzusehen.

8. Wärmemanagementmodul mit losem Schieberventil für Kühlkreisläufe der Verbrennungsmotoren, das im Wesentlichen mindestens einen Eingang (G) **umfasst,** der das Kühlmittel aus dem Motorblock überträgt und **gekennzeichnet durch,**
- Mindestens ein Körper (2), der Gehäuse für die Elemente des Wärmemanagementmoduls mit losem Schieberventil vorsieht und zwei Teile aufweist, die oben und unten anstehen und das Kühlmittel vom Eingang (G) übertragen
- Mindestens ein Raum (21), der sich innerhalb des Körpers befindet und in dem Komponenten des Moduls installiert sind
- Mindestens ein elektromechanisches Stellglied (9)
- Mindestens ein schiebendes loses Ventil (3) innerhalb des Raumes (21), das sich entlang der Achse des Raumes (21) bidirektional auf und ab bewegt und den Durchfluss der Kühlmittelflüssigkeit steuert.
- Mindestens eine Primärwelle (91), die tatsächlich ein Teil des elektromechanischen Stellglieds (9) ist und eine Drehbewegung ausführt
- Mindestens eine Kupplung (92), die eine Bohrung aufweist, die von der Primärwelle (91) verfahrbar ist und die eine Bewegung ohne Axialschlag vorzusehen kann
- Mindestens ein Spindelantriebsmechanismus (10), der die Drehbewegung von der Primärwelle (91) auf ein schiebendes loses Schieberventil (3) überträgt
- Mindestens ein Spindelantrieb (105), der sich entlang des Raums (21) innerhalb des Körpers (2) erstreckt und eine Führungsbohrung (101) auf der Seite der Primärwelle (91) aufweist und sich gleichzeitig mit der Primärwelle (91) dreht
- Mindestens ein primäres Verbindungselement (7), das tatsächlich eine Ausdehnung des schiebenden losen Ventils (3) ist,
- Mindestens ein sekundäres Verbindungselement (102), das von der im Körper (2) befindlichen Seite mit dem Spindelantrieb (105) verbunden ist und mit einem Vorsprung in eine Führungsbohrung am primären Verbindungselement (7) eingesetzt ist und das primäre Verbindungselement (7) gemäß der Drehrichtung des Spindelantriebs (105) in Öffnungs- oder Schließrichtung antreibt
- Mindestens ein Sitzelement (11), das mit dem Körper (2) verbunden ist und parallel zum schiebenden losen Ventil (3) verläuft und an dem das schiebende lose Ventil (3) eine Schiebebewegung ausführt
- Mindestens zwei Neigungspunkte (103), die mit dem Spindelantrieb (105) von seinem Berührungspunkt aus mit dem primären Verbindungselement (7), dem sekundären Verbindungselement (102) und dem Körper (2) verbunden sind und so angeordnet sind, dass sie die Bewegung des Spindelantriebsmechanismus (10) zwischen dem gewünschten Bereich und dem Bereich begrenzen und
- Mindestens ein Dichtelement (104), das mit der Oberfläche des Spindelantriebsmechanismus (10) verbunden ist, um die Reibungseinflüsse auf die Gelenkflächen zu reduzieren

9. Wärmemanagementmodul mit losem Schieberventil (1) nach Anspruch 8, **gekennzeichnet durch** eine Primärwelle (91), die tatsächlich ein Teil des elektromechanischen Stellglieds (9) ist und eine Drehbewegung ausführt.

10. Wärmemanagementmodul mit losem Schieberventil (1) nach Anspruch 8, **gekennzeichnet durch** ein sekundäres Verbindungselement (102), das tatsächlich eine Mutter ist.

11. Wärmemanagementmodul mit losem Schieberventil für Kühlkreisläufe der Verbrennungsmotoren, das im Wesentlichen mindestens einen Eingang (G) **umfasst,** der das Kühlmittel aus dem Motorblock überträgt, **gekennzeichnet durch,**
- Mindestens ein Körper (2), der Gehäuse für die Elemente des Wärmemanagementmoduls mit losem Schieberventil vorsieht und zwei Teile aufweist, die oben und unten anstehen und das Kühlmittel vom Eingang (G) übertragen
- Mindestens ein Raum (21), der sich innerhalb des Körpers befindet und in dem Komponenten des Moduls installiert sind.
- Mindestens schiebendes loses Ventil (3) innerhalb des Raumes (21), das sich bidirektional bewegt und den Durchfluss der Kühlmittelflüssigkeit steuert.
- Mindestens ein Stellglied mit dem Wärmeelement (4), das mit einem Heizelement (12) in Kontakt steht und sich entsprechend der Temperaturänderung auf und ab auf der Achse des Raumes (21) bewegt und durch diese Änderung eine zum Antreiben des losen Ventils (3) zu erzeugende Kraft erzeugt und die Temperatur des Kühlmittels steuert.
- Mindestens eine Feder (5), die eine Kraft auf das Stellglied mit dem Wärmeelement (4) in die entgegengesetzte Richtung der vom Stellglied mit dem Wärmeelement (4) bei Temperaturabsenkung erzeugten Kraft ausübt
- Mindestens ein Heizkörperventil (6), das den Durchfluss des Kühlmittels durch die Heizkörperleistung (R) steuert und das mit dem Stellglied mit dem Wärmeelement (4) verbunden ist
- Mindestens ein primäres Verbindungselement (7), das tatsächlich eine Ausdehnung des Heizkörperventils (6) ist und die Bewegung des Stellglieds mit dem Wärmeelement (4) auf das schiebende lose Ventil (3) überträgt
- Mindestens ein Sitzelement (11), das mit dem Körper (2) verbunden ist und parallel zum schiebenden losen Ventil (3) verläuft und an dem das schiebende lose Ventil (3) eine Schiebebewegung ausführt.

## Revendications

1. Module de gestion thermique avec une soupape à curseur lâche pour les systèmes de circulation de refroidissement des moteurs à combustion interne **comprend** essentiellement au moins une entrée (G) qui transfère le réfrigérant du bloc moteur et **caractérisée par,**
- Au moins un corps (2) qui fournit logement pour les éléments du module de gestion thermique avec une soupape à curseur lâche et a deux parties supérieure et inférieure imminentes et transmet le réfrigérant de l'entrée (G)
- Au moins un espace (21) qui se trouve à l'intérieur du corps et dans lequel des composants du module sont installés
- Au moins une soupape lâche glissante (3) à l'intérieur de l'espace (21), qui se déplace bidirectionnellement vers le haut et vers le bas le long de l'axe de l'espace (21) et contrôle l'écoulement du fluide réfrigérant.
- Au moins un actionneur avec élément thermique (4) à l'intérieur de l'espace (21) qui se déplace vers le haut et vers le bas sur l'axe de l'espace (21) selon le changement de température et par ce changement une force à générer pour entraîner une soupape de radiateur (6) et soupape lâche glissante (3) du radiateur et contrôle la température du fluide réfrigérant.
- Au moins un ressort (5) à l'intérieur de l'espace (21) qui applique une force sur l'actionneur avec élément thermique (4) dans la direction opposée à la force générée par l'actionneur avec élément thermique (4)
- Au moins une soupape de radiateur (6) qui contrôle l'écoulement du fluide réfrigérant à travers la sortie du radiateur (R) par ouverture et fermeture et qui est reliée à l'actionneur avec élément thermique (4)
- Au moins deux éléments de connexion primaires (7) qui sont en fait une extension de la soupape de radiateur (6) et transfèrent le mouvement de l'actionneur avec élément thermique (4) à la soupape lâche (3) par les trous qui guident les éléments de connexion primaires (7) sur la soupape lâche glissante (3)
- Au moins deux dents de guidage (8) qui sont en fait une extension du corps (2) dans et le long de l'espace (21) qui maintient la soupape lâche glissante (3) sur l'axe de l'espace (21) par guidage des deux bords.

2. Module de gestion thermique avec une soupape à curseur lâche (1) selon la revendication 1, **caractérisé par** un corps (2) dont la partie supérieure est reliée à la sortie du radiateur (R) et la sortie by-pass (B) et la partie inférieure est reliée à l'entrée (G) et à l'actionneur avec l'élément thermique.

3. Module de gestion thermique avec une soupape à curseur lâche (1) selon la revendication 1, **caractérisé par** un actionneur avec élément thermique (4) qui a un composé thermosensible à l'intérieur ou qui est produit par l'élément thermosensible.

4. Module de gestion thermique avec une soupape à curseur lâche (1) selon la revendication 1, **caractérisé par** un actionneur avec élément thermique (4) qui a un composé à base de paraffine à l'intérieur.

5. Module de gestion thermique avec une soupape à curseur lâche (1) selon la revendication 1, **caractérisé par** un actionneur avec élément thermique (4) qui se dilate selon la température et génère une force vers le bas et entraîne l'actionneur avec élément thermique (4) et la soupape lâche glissante (3) vers le bas par cette force et qui est repoussé vers le haut par un ressort (5) en cas de retrait dû à une baisse de température.

6. Module de gestion thermique avec une soupape à curseur lâche (1) selon la revendication 1, **caractérisé par** une soupape lâche glissante (3) qui assure l'étanchéité par la chute de pression générée par les flux des fluides réfrigérants sur les deux côtés.

7. Module de gestion thermique avec une soupape à curseur lâche (1) selon la revendication 1, **caractérisé par** un corps (2) qui a une épaisseur de paroi autour de l'arbre de l'actionneur avec élément thermique (4) pour entourer cet arbre afin de guider l'arbre pour fournir un mouvement uniquement sur l'axe de l'espace (21) pour l'actionneur avec élément thermique (4).

8. Module de gestion thermique avec soupape à curseur lâche pour les systèmes de circulation de refroidissement des moteurs à combustion interne **comprend** essentiellement au moins une entrée (G) qui transfère le réfrigérant du bloc moteur et **caractérisée par,**
- Au moins un corps (2) qui fournit logement pour les éléments du module de gestion thermique avec une soupape à curseur lâche et a deux parties supérieure et inférieure imminentes et transmet le réfrigérant de l'entrée (G)
- Au moins un espace (21) qui se trouve à l'intérieur du corps et dans lequel des composants du module sont installés
- Au moins un actionneur électromécanique (9).
- Au moins une soupape lâche glissante (3) à l'intérieur de l'espace (21), qui se déplace bidirectionnellement vers le haut et vers le bas le long de l'axe de l'espace (21) et contrôle l'écoulement du fluide réfrigérant.
- Au moins un arbre primaire (91) qui en effet fait partie de l'actionneur électromécanique (9) et qui effectue un mouvement de rotation
- Au moins un accouplement (92) qui a un trou que l'arbre primaire (91) est capable de traverser et qui est capable de fournir un mouvement sans saut axial
- Au moins un mécanisme d'entraînement de broche (10) qui transfère le mouvement de rotation de l'arbre primaire (91) à la soupape lâche glissante (3)
- Au moins un entraînement de broche (105) qui s'étend le long de l'espace (21) à l'intérieur du corps (2) et a un trou de guidage (101) sur le côté d'arbre primaire (91) et tourne simultanément avec cet arbre primaire (91)
- Au moins un élément de connexion primaire (7) qui est en fait une extension d'une soupape lâche glissante (3),
- Au moins un élément de connexion secondaire (102) qui est relié à l'entraînement de broche (105) du côté qui est l'intérieur du corps (2) et est inséré dans un trou de guidage sur l'élément de connexion primaire (7) avec une protubérance et entraîne l'élément de connexion primaire (7) au sens d'ouverture et de fermeture selon le sens de rotation de l'entraînement de la broche (105)
- Au moins un élément de siège (11) qui est relié au corps (2) et est parallèle à la soupape lâche glissante (3) et sur lequel la soupape lâche glissante (3) effectue un mouvement de glissement
- Au moins deux points d'appui (103) qui sont reliés à l'entraînement de broche (105) de son point de contact à l'élément de connexion primaire (7), l'élément de connexion secondaire (102) et le corps (2) et sont placés pour limiter le mouvement du mécanisme d'entraînement de broche (10) entre la surface souhaitée et
- Au moins un élément d'étanchéité (104) qui est relié à la surface sur le mécanisme d'entraînement de broche (10) pour réduire les effets de frottement sur les faces de joint

9. Module de gestion thermique avec une soupape à curseur lâche (1) selon la revendication 8, **caractérisé par** un arbre primaire (91) qui en effet fait partie de l'actionneur électromécanique (9) et qui effectue un mouvement de rotation

10. Module de gestion thermique avec une soupape à curseur lâche (1) selon la revendication 8, **caractérisé par** un élément de connexion secondaire (102) qui est en fait un écrou.

11. Module de gestion thermique avec une soupape à curseur lâche pour les systèmes de circulation de refroidissement des moteurs à combustion interne **comprend** essentiellement au moins une entrée (G) qui transfère le réfrigérant du bloc moteur et **caractérisée par,**
- Au moins un corps (2) qui fournit logement pour les éléments du module de gestion thermique avec une soupape à curseur lâche et a deux parties supérieure et inférieure imminentes et transmet le réfrigérant de l'entrée (G)
- Au moins un espace (21) qui se trouve à l'intérieur du corps et dans lequel des composants du module sont installés
- Au moins une soupape lâche glissante (3) à l'intérieur de l'espace (21), qui se déplace bidirectionnellement et contrôle l'écoulement du fluide réfrigérant
- Au moins un actionneur avec élément thermique (4) qui est un élément de chauffage (12) et se déplace vers le haut et vers le bas sur l'axe de l'espace (21) selon le changement de température et par ce changement une force à générer pour entraîner la soupape lâche glissante (3) du radiateur et contrôle la température du fluide réfrigérant.
- Au moins un ressort (5) qui applique une force sur l'actionneur avec élément thermique (4) dans la direction opposée à la force générée par l'actionneur avec élément thermique (4) lorsque la température diminue
- Au moins une soupape de radiateur (6) qui contrôle l'écoulement du fluide réfrigérant à travers la sortie du radiateur (R) et qui est reliée à l'actionneur avec élément thermique (4)
- Au moins un élément de connexion primaire (7) qui est en fait une extension de la soupape de radiateur (6) et transfère le mouvement de l'actionneur avec élément thermique (4) sur la soupape lâche glissante (3)
- Au moins un élément de siège (11) qui est relié au corps (2) et est parallèle à la soupape lâche glissante (3) et sur lequel la soupape lâche glissante (3) effectue un mouvement de glissement
